(19) Europäisches Patentamt
European Patent Office
Office européen des brevets

(11) **EP 2 312 266 B1**

(12) **EUROPEAN PATENT SPECIFICATION**

(45) Date of publication and mention
of the grant of the patent:
**17.06.2015 Bulletin 2015/25**

(51) Int Cl.:
**G01B 21/04** *(2006.01)*    **G01B 7/14** *(2006.01)*

(21) Application number: **09172800.6**

(22) Date of filing: **12.10.2009**

(54) **Electronic self-calibration for turbine blade clearance sensor**

Elektronische Selbstkalibrierung eines Sensors zur Messung des Schaufelspitzenabstands

Auto-étalonnage électronique pour capteur de mesure du jeu d'extrémités d'aubes

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(43) Date of publication of application:
**20.04.2011 Bulletin 2011/16**

(73) Proprietor: **General Electric Company
Schenectady, NY 12345 (US)**

(72) Inventors:
• **Andarawis, Emad Andarawis
Ballston Lake, NY 12019 (US)**
• **Hasz, Wayne Charles
Pownal, VT 05261 (US)**
• **Chan, David So Keung
Niskayuna, NY 12309 (US)**
• **Shaddock, David Mulford
Troy, NY 12180 (US)**
• **Down, John Harry
Lanesborough, MA 01237 (US)**

• **Dasgupta, Sambita
Niskayuna, NY 12309 (US)**
• **Esler, David Richard
Gloversville, NY 12078 (US)**
• **Ren, Zhiyuan
Malta, NY 12020 (US)**
• **Balasubramaniam, Mahadevan
Ballston Lake, NY 12019 (US)**
• **Kouada, Ibrahim Issoufou
Niskayuna, NY 12309 (US)**

(74) Representative: **Williams, Andrew Richard et al
GPO Europe
GE International Inc.
The Ark
201 Talgarth Road
Hammersmith
London W6 8BJ (GB)**

(56) References cited:
**FR-A1- 2 624 324    US-A1- 2006 239 813
US-B1- 6 252 393**

EP 2 312 266 B1

## Description

BACKGROUND

The present description relates generally to methods and systems for calibration of a sensor system, and more particularly to calibration of differential sensing systems.

Various types of sensor systems have been used to measure the distance between two objects. One of such sensor systems includes a two-channel differential sensing system. In a two channel differential sensing system, various error sources that affect the two channels uniformly can be eliminated or reduced. Matching a response of the two channels is of utmost importance to be able to realize the benefits of the differential measurement. Any mismatch in the response of the two channels results in significant error in a measurement. For example, the error in clearance measurement results in inaccurate displacement between a shroud and a turbine blade of a turbine. It is therefore desired to dynamically and periodically check and correct the matching of the response of the two channels in the system. Variation in electronic components due to temperature effects and long term drifts are two reasons for change in response of the channel.

Various techniques in circuit design have been utilized to reduce the temperature coefficient of circuits and to reduce the effect of the drifts. However, these techniques don't ensure measurement accuracy over a long period of time. A commonly used technique is use of temperature compensated components in the sensor system. Another commonly used technique is use of very low drift components. Both of these methods reduce the variation, but make no provision for detecting and correcting drifts and variations over time and temperature. Current clearance sensing systems rely heavily on frequent lab calibration to address this problem. For example, for a flight system that requires many years of service without human intervention, calibration must be done in a transparent way and must not require the system be taken apart, or any human intervention.

US 2006/0239813 A1 relates to a displacement sensor system and its mode of operation. FR 2,624,324 relates to an electrical voltage comparator with differential auto-calibration.

BRIEF DESCRIPTION

In accordance with one exemplary embodiment of the present invention, a system for self-calibration of multiple channel clearance sensor system is provided as defined in claim 1 herein.

In accordance with one embodiment of the present invention, a method for self-calibrating a multiple channel clearance sensor system is provided as defined in claim 9 herein.

DRAWINGS

These and other features, aspects, and advantages of the present invention will become better understood when the following detailed description is read with reference to the accompanying drawings in which like characters represent like parts throughout the drawings, wherein:

FIG. 1 is a diagrammatical representation of a rotating machine having a sensor system, in accordance with an embodiment of the present invention;

FIG. 2 is a diagrammatical representation of a sensor system of FIG. 1, in accordance with an embodiment of the present invention;

FIG. 3 is a diagrammatical representation of an exemplary system for clearance measurement in accordance with an embodiment of the present invention;

FIG. 4a is a schematic illustration of an exemplary absolute calibration section, in accordance with the scope of the claims;

FIG. 4b is a schematic illustration of another exemplary absolute calibration section, but falling outside the scope of the claims;

FIG. 5 is a schematic illustration of an exemplary relative calibration section, but falling outside the scope of the claims;

FIG. 6 is a schematic illustration of an offset calibration section in accordance with an embodiment of the present invention; and

FIG. 7 is a flowchart illustrating steps of calibration of the sensor system.

DETAILED DESCRIPTION

As discussed in detail herein, embodiments of the invention include a system and method for self-calibration of clearance measurement.

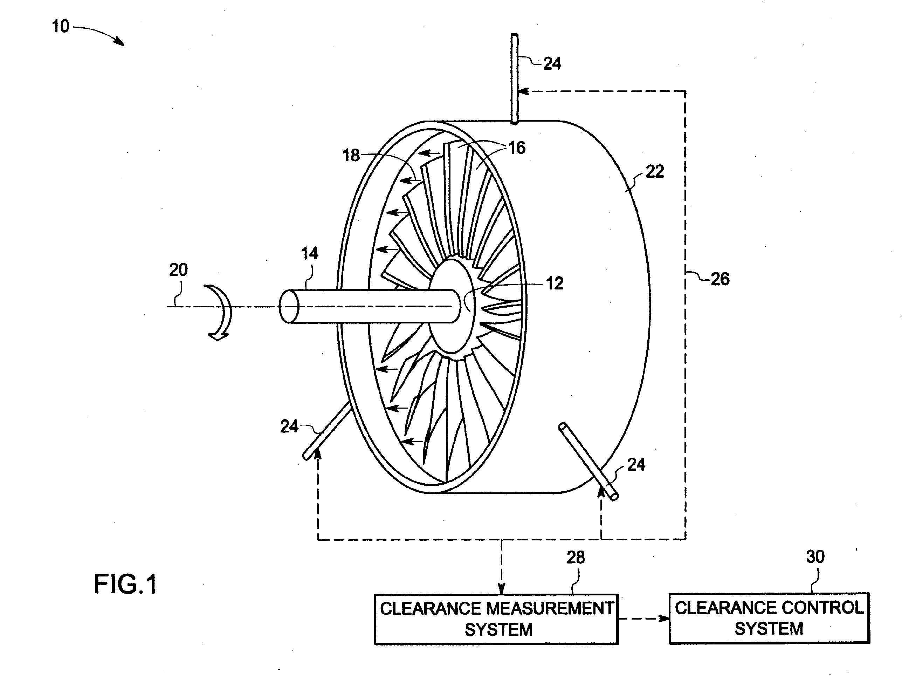

FIG. 1 is a perspective view of an exemplary rotating machine, such as an aircraft engine turbine 10, wherein aspects of the present technique can be incorporated. It should be noted here, however, that the present technique can be used in any other rotating machine such as but not limited to steam turbine and gas turbine. The turbine includes a rotor 12 mounted on a shaft 14. A plurality of turbine blades 16, are affixed to the rotor 12. In operation, the blades 16 are subject to a fluid 18 or steam at a high temperature and pressure, which does work on the blades 16 and causes them to rotate about an axis 20. The blades 16 rotate within a stationary housing or shroud 22 that is positioned approximately radially and circumferentially around the blades. There is a relatively small clearance between the blades 16 and the shroud 22 to prevent excessive leakage of the working fluid between the blades 16 and the shroud 22. In the ideal no loss system, there should be no clearance, so all the fluid will work on blades 16 only. However, that configuration will make movement of blades impossible due to the resistance between the blades 16 and the shroud 22 or to prevent rubs between the rotor blades 16 and the shroud 22. A zero clearance system is also impractical because of vibrations.

In accordance with one embodiment, one or more clearance sensors 24 are disposed within and circumferentially around the stationary shroud 22. In the illustrated embodiment, the clearance sensors 24 include capacitive probes. Capacitive probe sensors provide variable capacitance as a representative of the clearance. In certain embodiments, the clearance sensors 24 may include microwave based sensors, optical sensors, or eddy current sensors. As will be appreciated by those skilled in the art, microwave sensors or optical sensors emit a radio signal or a light signal respectively on the target and measure characteristics of the reflection that is based on the clearance. These characteristics may include the amplitude of the reflected signal, a time delay or phase difference between an excitation and a reflected signal. Similarly, eddy current sensors induce eddy currents in the target. The interaction of the magnetic fields produced by eddy currents and the sensor currents depends on clearance. The eddy current sensor then provides a voltage output representative of the clearance. The target in one embodiment is a turbine blade.

One advantage of using capacitive sensors is it provides sub mills resolution. Each of the sensors 24 is configured to generate a signal indicative of a radial and/or an axial position of the blades 16 with respect to the shroud 22 at their respective circumferential locations. The sensor signals 26 are transmitted to a clearance measurement system 28 for measuring the clearance. Further, the clearance measurement through the clearance measurement system 28 is used for controlling the clearance between the shroud 22 and the turbine blades 16 via a clearance control system 30. The sensor signals 26 can be communicated to the clearance measurement system 28 via a signal wire or wirelessly via a wireless transmitter or transceiver (not shown). The communication can be unidirectional from the sensors to the clearance measurement system or bidirectional between the sensors and the measurement system.

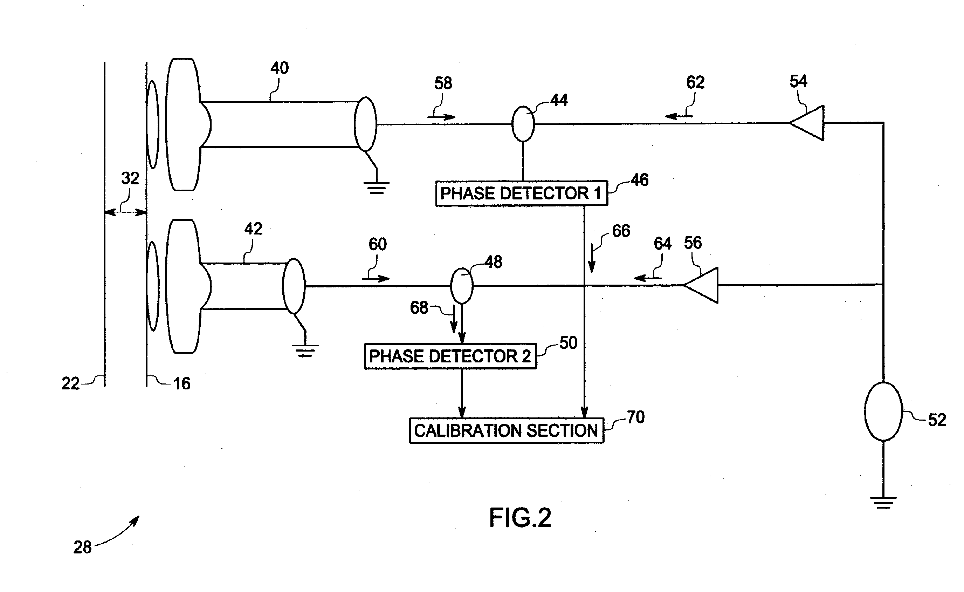

Fig. 2 illustrates an exemplary configuration of a clearance measurement system 28 of Fig. 1. The system 28 in this embodiment comprises first and second sensors 40, 42 configured to generate first and second measurement signals representative of first and second capacitance between the shroud 22 and the rotor blades 16 of steam turbine of Fig. 1.

In this example, the clearance 32 between the shroud and the rotor blades of the turbine is calculated by ratiometric techniques from first and second signal of first and second sensor 40, 42. A bidirectional coupler 44 and a phase detector 46 are coupled to the first sensor 40 for measuring the capacitance through the first sensor 40. Similarly, a bidirectional coupler 48 and a phase detector 50 are coupled to the second sensor 42 for measuring the capacitance through the second sensor 42. A signal generator 52 is coupled to the first and second sensors 40 and 42 for exciting the first and second sensors. Further, first and second amplifiers 54, 56 are coupled to the signal generator 52 to amplify input signals generated from the signal generator 52. The amplifiers 54, 56 are optional depending upon the signal generation capability and filtering can also be used to condition the signal generator output. In one embodiment, a capacitor (not shown) can be deployed in series with each sensors 40, 42 and signal generator 52 and the phase detectors 46, 52 can be coupled on either side of the capacitor.

According to one embodiment, the signal generator 52 at an excitation frequency excites first and second sensors 40, 42 via the first and second excitation signals 62, 64. A first and second reflected signal 58, 60 corresponding to the first and second excited signal 62, 64 will originate from the first and second sensors 40, 42. The capacitance through the first sensor 40 is measured by measuring a phase difference between the excitation signal 62 and the corresponding reflected signal 58 by the bidirectional coupler 44 and the phase detector 46. The phase detector 46 is configured to detect a first reflected signal 58 based upon the excitation frequency to generate first measurement signal 66. Similarly, measuring a phase difference between the excitation signal 64 and the corresponding reflected signal 60 by the bidirectional coupler 48 and the phase detector 50 generates the second measurement signal 68 representative of the capacitance through the second sensor 42. The first and second measurement signals 66 and 68 are then transmitted to a calibration section 70 for calculation of the clearance based upon a function of the first and second measurement signals 66 and 68. In one embodiment the function is a ratio between first and second measurement signals. As described herein, the sensor system 28 in this example employs two sensors 40, 42 for capacitive measurements between the rotor blades 22 and the shroud 16. However, other configurations of the sensor system having more sensors are within the scope of the system.

The capacitance between two objects that are approximately in a parallel plate configuration is given by following equation:

$$C = \varepsilon_r \varepsilon_0 \frac{A}{d} \quad (1);$$

where, $C$ is the capacitance, $A$ is the overlap surface area of the object, d is the distance between the two objects,

$\varepsilon_0$, is permittivity of free space and $\varepsilon_r$ is the permittivity of a medium between the two objects. From equation (1), it can be seen that the capacitance between two objects depends on the distance between two objects. Thus, by calculating the capacitance between the shroud and the rotor blades, the distance between the shroud and the rotor blades is thereby calculated.

In one embodiment, the processing circuitry 70 includes a filter (not shown) and a combiner (not shown). The output signals 66, 68 from the phase detectors 46, 50 may include a noise component due to crosstalk between the first sensor 40 and the second sensor 42. Thus, a filter can be used to filter signal noise generated by the crosstalk between the sensors. The combiner combines the output signals from the phase detectors to determine a ratiometric capacitance between the shroud and the rotor blades. The ratiometric capacitance provides a substantially accurate error-minimized capacitance measurement between the shroud and the rotor blades.

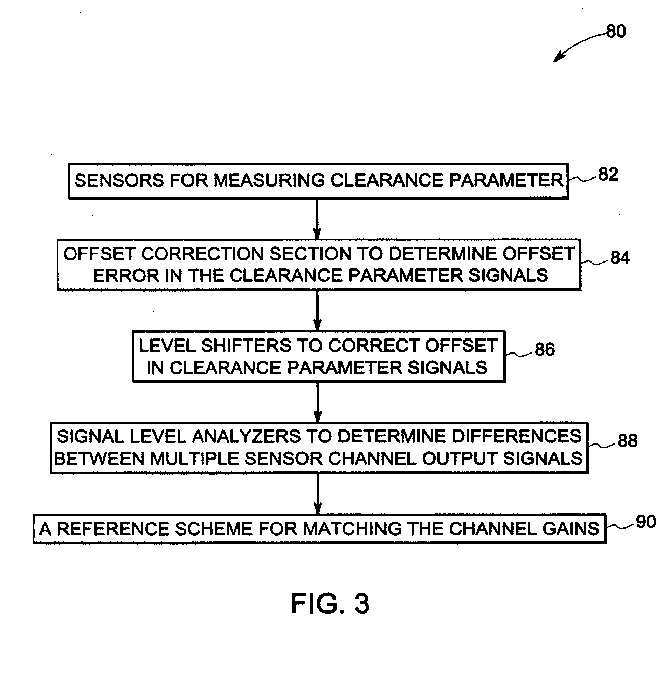

FIG. 3 is a diagrammatical illustration of an exemplary system 80 for clearance measurement for a rotating machine. In the illustrated embodiment, sensors 82 measure and generate signals representing clearance parameter. As explained earlier the sensors may be capacitive probe sensors, microwave based sensors, optical sensors, or eddy current sensors. In one embodiment and offset correction section is used to determine the offset error in the clearance parameter signals 84. In one example, a DC level finder determines offset error in the clearance measurement signal and level shifters 86 are used in the system to correct the offset errors in the clearance measurement signals. The system further comprises signal level analyzers 88 to determine the difference between the channel sensor outputs. In one embodiment, a reference scheme 90 is used for matching the channel gains. The reference scheme 90 may include an automatic gain controller and it can be an absolute scheme or a relative scheme. It should be noted that the offset correction section and the signal level analyzer can be implemented in an analog domain or by appropriate programming of a digital processor, or a combination of analog and digital circuitry such as a amplifiers, microprocessors, analog-to-digital converters and digital-to-analog converters. One embodiment is a two channel sensor system however multiple channel processing is also within the scope of the invention. In one multiple channel embodiment, the channels can be referenced to each other while in another embodiment one of the channels is selected as a reference channel. For example, certain applications such as radial and axial clearance, that uses multiple sensors in the processing.

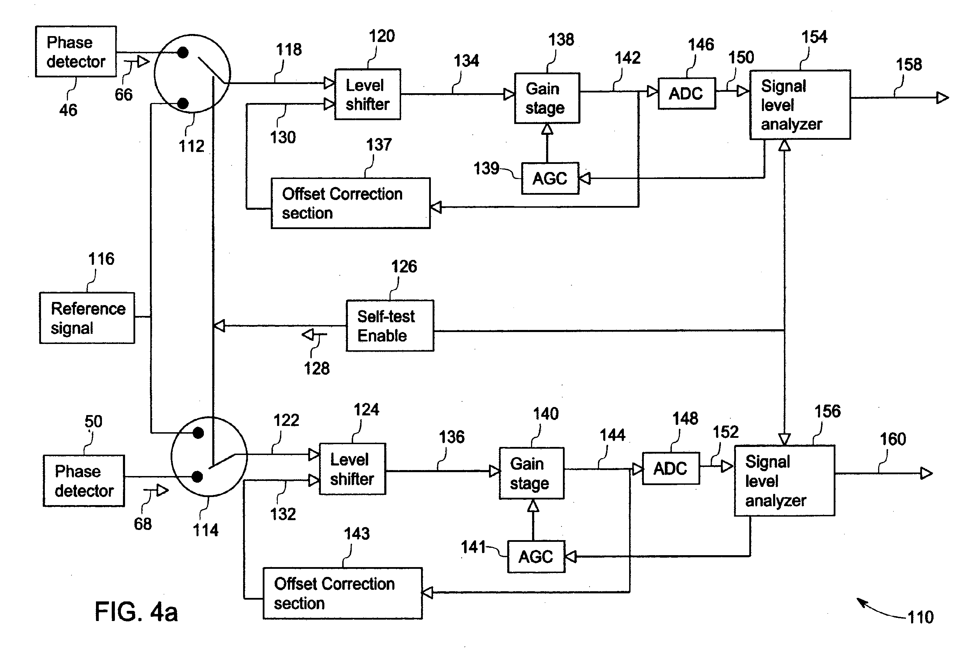

FIG. 4a is one representation 110 of an exemplary calibration circuitry in FIG. 2 falling within the scope of the claims. This figure shows signal conditioning gain with absolute gain correlation for a two-channel system. As explained herein, in a two channel differential sensing system, tight matching of the response of the two channels results in higher performance. The reference to channel herein refers to the sensor(s) and its corresponding elements that are used to determine clearance such as shown in FIG. 1. Any mismatch in the response of the two channels will reduce the common-mode error rejection ability of the system. The calibration section ensures the errors between first and second clearance measurement signals 66 and 68 are common-mode and ensures that any error signals that are common to both channels continue to have an identical effect on the output of both channels after passing through the signal conditioning. In the illustrated example, first switch 112 and second switch 114 are coupled to the first phase detector 46 and the second phase detector 50 respectively. The first and second clearance measurement signals 66, 68 from the first and second phase detector 46, 50 are the first inputs to the first and second switches 112 and 114. In this example the first and second switches 112, 114 are single pole double through (SPDT) switches. As will be appreciated by those skilled in the art SPDT switch can have two positions thereby allowing the processing section to connect to either the phase detector signals 66, 68 or a reference signal 116. In another embodiment, the switches 112, 114 are radio frequency controlled switches that operate via multiple radio frequency signals in a desired range. In another embodiment the switch may be a MEMS switch. Other switching mechanisms can be employed which are known to those in the art.

A common reference signal 116 is a switched input to the first and the second switches. Applying the common reference signal 116 to the calibration section 110 via the first and the second switch 112, 114 allows for establishing a common reference point that ensures that differential error between the channels is minimized. An output signal 118 of the first switch 112 is an input to a first level shifter 120. Similarly, an output signal 122 of the second switch 114 is an input to a second level shifter 124. A self-test enable 126 generates an enable signal 128 for the first and second switches 112, 114 to control the switching for the reference signal 116. In one embodiment, if the enable signal 128 is 'high', the reference signal 116 is the first input 118, 122 to the level shifters 120, 124. If the enable signal is 'low', the output signal of phase detector 46, 50 is the first input 118, 122 to the level shifters 120, 124 respectively. In one embodiment, the self-test enable circuit 126 generates the enable signal 128 at a pre-determined switching interval or in response to a calibration request signal.

The level shifters 120, 124 shift the input signals 118, 122 by a level provided by the shift level input signals 130, 132. The shift level input signals 130 and 132 are provided by offset correction circuitry 137 and 143 respectively. The output signals 134, 136 of the level shifters 120, 124 are then transmitted to the gain stages 138, 140 or the amplifiers. The amplifiers 138, 140 amplify the output signals 134, 136 from the level shifters 120, 124. There may be automatic gain controller (AGC) 139, 141 coupled to each corresponding gain stage 138, 140 to maintain a referenced amplification.

In one embodiment, the reference signal source 116 used is a temperature compensated very low drift components source. Thus, a high accuracy reference signals ensures that the gain of the amplifier is also well controlled. The output signals from the amplifier 142 and 144 are then input to analog-to-digital converters 146, 148 that converts signals 142, 144 to digital calibrated signals 150, 152. The analog-to-digital converter 146, 148 outputs the calibrated voltages into signal level analyzers 154, 156. Voltage signal outputs or channel gain signals 158, 160 from the signal level analyzers 154, 156 are used to generate calibration curves for processing that can be done in real-time or for post processing. The channel gain signals 158, 160 from the signal level analyzers 154, 156 are also coupled to the self-test enable 126. The self-test enable 126 then controls the switching of the signals between the reference signal 116 and the phase detector output signals 66, 68. When the reference signal 116 is the input to the level shifters 120, 124, discrepancy in the voltage signals 158 and 160 obtained from first and second signal level analyzers 154 and 156 respectively is measured. Accordingly and as per the scope of the claims, the gain of one or both of the gain stages 138, 140 is then adjusted to match the respective discrepancy in the voltage signals 158 and 160. In one embodiment, the adjustment takes place in the analog domain through the use of controllable components such as variable gain amplifiers. In another embodiment, the discrepancy signal is digitized and a digital gain correction is calculated. The gain correction signal is used to correct the gain of the two channels in the digital domain.

It should be understood that while the explanation is directed to a two channel system, the system is not restricted to two channels and other embodiments have multiple channel processing capabilities. For example, a three-channel embodiment would have three sensors and accompanying processing elements as detailed herein with the reference signal switched between the three channels. In one further embodiment, certain elements can be shared and the various sensors can be switched as appropriate.

In one embodiment of the present invention, the DC level component in the phase detector signal and gain values of amplifiers are detected and tracked periodically by using on board references and algorithms to track these values. The information is then sent to a processing unit. The processing unit calculates correction factors for each channel and also tracks the history of corrections. The processor applies the corrections to the data i.e. corrections to the gain of the amplifiers or corrections to the shift level signal of the level shifter. The corrections are done to have high degree of matching between the characteristics of the two channels. If after the corrections, a trend is detected by the processor that the gain or offset is drifting at a high rate, health assessments of the sensor, and electronics are made. Based on the assessment, the processor may trigger an alert indicating that a higher than expected error or deterioration is detected and a service request for the clearance sensor system is dispatched. In a particular embodiment, the gain is adjusted via a digital multiplier.

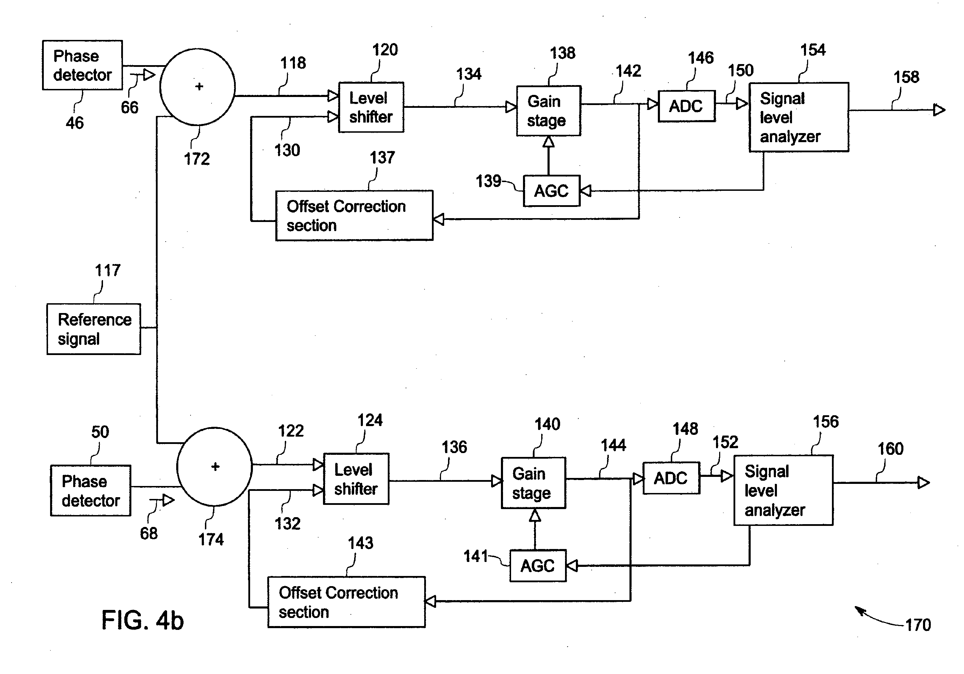

Fig. 4b is another representation of an exemplary calibration circuitry 170 of FIG. 2, but falling outside the scope of the claims. In this embodiment, the phase detector output signals 66, 68 and the reference signal 117 are both inputs to the level shifters 120, 124. In other words, the first and second switches 112 and 114 and the self-test enable circuit 126 of earlier embodiment are omitted in this embodiment. A summer 172 is used to combine the phase detector output signal 66 and the reference signal 117 as appropriate to provide correlation. Similarly, a summer 174 adds the phase detector output signal 68 and the reference signal 117. In this embodiment, a frequency of the reference signal 117 and a frequency of the output signals 66, 68 of the phase detectors 46, 50 are different and offset adequately so there is no effect by having the reference signal 117 combined with the phase detector output signals 66, 68. In one embodiment, the frequency of the reference signal 117 is about 500 kHz and the frequency of the output signals 66, 68 of the phase detectors 46, 50 are about 100 kHz. It should be noted, however, that other values of frequencies can be used for these signals. This configuration enables simultaneous connection of the phase detector signal and the reference signal, and therefore ensures continuous input of the phase detectors 46, 50 outputs to the level shifters 120, 124. The reference signal processing can be performed at various time intervals or as otherwise established by design criteria.

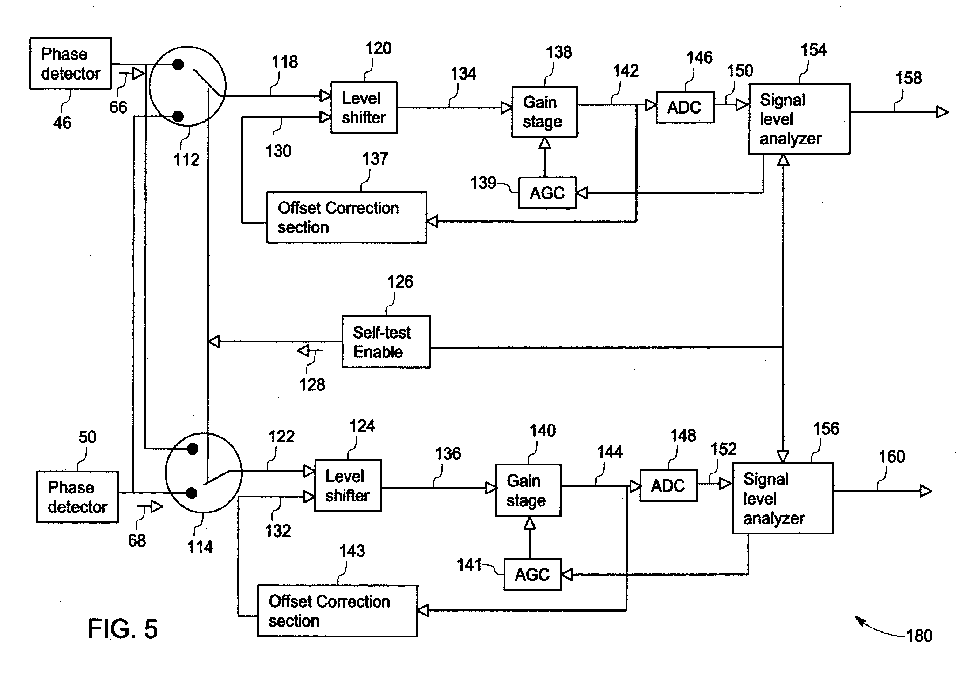

FIG. 5 illustrates another exemplary configuration 180 of the calibration circuitry in FIG. 2, but falling outside the scope of the claims. This example shows the signal conditioning gain with relative gain correlation between channels such that there is a relative reference signal processing. In this embodiment, output 66 of the first phase detector 46 is an input to second switch 114. Similarly, output 68 of the second phase detector 50 is an input to the first switch 112. In one embodiment, when the self-test enable signal 128 is switched, input signal 118, 122 to the first and second level shifters 120, 124 is the output signal 66 of first phase detector 46. In another embodiment, when the self-test enable signal 128 is switched, input signal 118, 122 to the first and second level shifters 120, 124 is the output signal 68 of second phase detector 50. This configuration avoids use of separate reference signal 116, 117 of FIG. 4a or FIG. 4b for the purpose of calibration. As noted herein, while described in a two channel implementation, multiple channels are a further embodiment and the reference processing can be implemented among the channels.

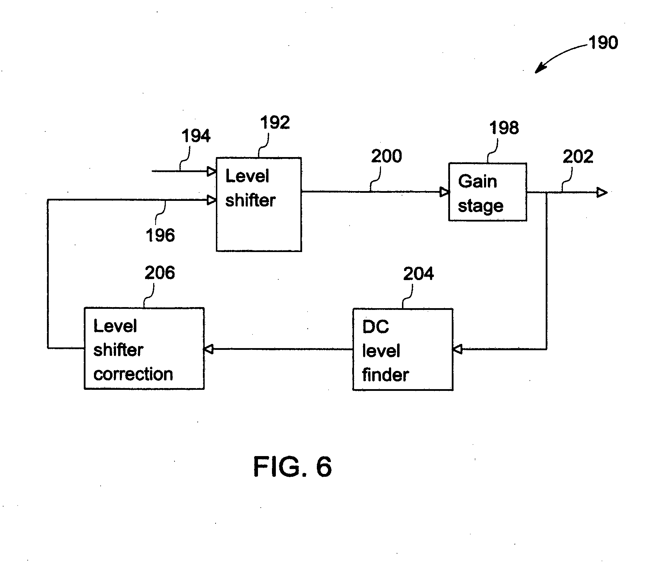

FIG. 6 is a schematic representation 190 of an offset correction circuitry of FIG. 4a, FIG. 4b, and FIG. 5 wherein the elements for only one channel are depicted. Similar functionality would be used for the other channel and there could be a common reference link such as coupling the inputs to the DC level finder 204. The reference signal is used to calculate an error signal between the actual DC level of the signal and the desired DC level. Using a common reference link in the DC level finder ensures that errors in the reference contribute equally to both channels, and therefore maintains a high degree of matching between the two channels. According to one embodiment this performs electronic offset processing and comprises a level shifter 192 configured to shift the level of a first input signal 194 based on a second input signal 196 of the level shifter 192. In one embodiment, the first input signal 194 is the first measurement signal 66 (FIG. 2) from first sensor 40 of FIG. 2. In another embodiment, the second input signal 196 of the level shifter 192 is a shift level signal or an offset signal. The offset correction circuitry 190 further comprises a gain stage 198 or an amplifier to amplify the output signal 200 of the level shifter 192. The gain stage output 202 is then used as measurement signal for calculation of clearance. The gain stage output signal 202 is also fed back to a DC level finder 204. The DC level finder 204 determines the DC component in the gain stage output signal. The error signal output of the DC level finder 204 is transmitted to a level shifter correction circuitry 206. The level shifter correction circuitry 206 then determines the offset by which the first input signal 194 of the level shifter 192 need to be shifted. Dynamic adjustment of the level shifter 192 ensures that large offsets do not saturate the amplifier stage 198. In one embodiment, similar offset correction circuitry is used for the second channel of FIG. 4a, FIG. 4b, and FIG. 5. The offset correction circuitry 190 is shown in a structural presentation however certain functionality may be implemented via software processing.

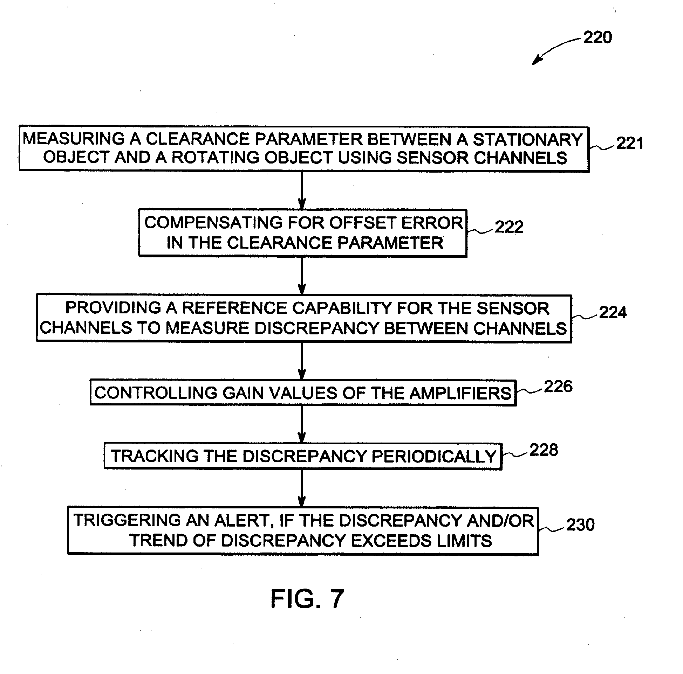

FIG. 7 is a flowchart 220 illustrating steps of calibration of the multiple channel sensor system according to one embodiment. In step 221, the clearance parameter between the stationary object and the rotating object is measured using sensor channels. In step 222, an offset error in the clearance parameter is measured using an offset correction circuitry. In step 224, both the sensor channels are provided with a reference signal, whether a common reference signal such as shown in FIG. 4a, FIG. 4b or via the relative processing of FIG. 5. As described earlier, the common reference signal source will have temperature compensated very low drift components to control the gain properly. In one embodiment, in step 224, the output responses of the channels are measured and compared against each other. In other words, discrepancy between the channel output signals is measured. In step 226, the gain values of the amplifiers in the channels are controlled based on the measured discrepancy between two output signals and in step 228, the discrepancy or the error is tracked periodically. In one embodiment, a threshold value of the error is set in the memory of a processor. If the error is larger than the threshold value or larger than an expected error trend, then the processor triggers an alert indicating a maintenance request for the clearance sensor system in step 230. As explained herein, in one of the absolute calibration examples, a self-test enable circuit controls the input to the channels between the reference signal and the actual sensor output signal. The alert provides a mechanism to determine the health of the system and there are various alerting mechanisms such as audio, visual or both as well as notification schemes that can dispatch emails, text messages, or dial phone numbers.

As will be appreciated by those of ordinary skill in the art, the foregoing method or part of the method and the process steps may be implemented by suitable computer program code on a processor-based system, such as a general-purpose or special-purpose computer. The computer program code, as will be appreciated by those of ordinary skill in the art, may be stored or adapted for storage on one or more tangible, machine readable media, such as on memory chips, local or remote hard disks, optical disks (that is, CD's or DVD's), or other media, which may be accessed by a processor-based system to execute the stored code. Note that the tangible media may comprise paper or another suitable medium upon which the instructions are printed. For instance, the instructions can be electronically captured via optical scanning of the paper or other medium, then compiled, interpreted or otherwise processed in a suitable manner if necessary, and then stored in a computer memory.

While only certain features of the invention have been illustrated and described herein, many modifications and changes will occur to those skilled in the art. It is, therefore, to be understood that the appended claims are intended to cover all such modifications and changes as fall within the scope of the invention as claimed.

**Claims**

1.   A system (110) for self-calibration of multiple channel clearance sensor system comprising:

at least first and second sensors (40, 42) for measuring at least respective first and second clearance parameter signals (66, 68) between a stationary object and a rotating object;
at least first and second offset correction sections (137, 143) configured to determine respective first and second offset errors (130, 132) in the respective first and second clearance parameter signals (66, 68);
at least first and second level shifters (120, 124) coupled to the respective said first and second offset errors and switchably coupled to the respective said first and second clearance parameter signals (66, 68);
at least first and second amplifiers (138, 140) to amplify the respective first and second level shifter outputs (134, 136);
at least first and second analog to digital converters (ADC) (146, 148) coupled to the respective first and second amplifier outputs (142, 144) to provide respective first and second digital outputs (150, 152);

at least first and second signal level analyzers (154, 156) coupled to the respective first and second digital outputs (150, 152);

**characterized in that** the system (110) further comprises:

a common reference signal (116) provided to be switchably coupled (112, 114) to respective said first and second level shifters (120, 124);

wherein the switchable coupling (112, 114) of the first and second level shifters (120, 124) and the common reference signal (116) are operable to switch between: i) the common reference signal (116) being input to the respective first and second level shifters (120, 124); and ii) the first and second clearance parameter signals (66, 68) being input to the respective first and second level shifters (120, 124);

the system (110) being adapted to be operable such that when the common reference signal (116) is input to the respective first and second level shifters (120, 124), a discrepancy in voltage signals obtained from the first and second signal level analyzers (154, 156) respectively is measured, the gain of one or both of the first and second amptifiers (138, 140) is adjusted to match the measured discrepancy in the respective voltage signals.

2. The system (110) of claim 1, wherein said discrepancy voltage is used by said first and second level shifters (120, 124) through respective said first and second offset correction sections (137, 143).

3. The system (110) of claim 1 or 2, wherein said reference signal (116) is intermittently switchably coupled to the first and second level shifters (120, 124).

4. The system (110) of any of the preceding claims, further comprising first and second automatic gain controllers (139, 141) coupled to the respective first and second signal level analyzers (154, 156) and configured to control a gain of the respective first and second amplifiers (138, 140).

5. The system (110) of any of the preceding claims, wherein the stationary object comprises a shroud of a rotating machine.

6. The system (110) of any of the preceding claims, wherein the rotating object comprises a rotating blade of a rotating machine.

7. The system (110) of any of the preceding claims, wherein the sensor comprises a capacitor sensor, a microwave based sensor, an optical based sensor or an eddy current sensor.

8. The system (110) of any of the preceding claims, wherein the clearance parameter comprises a capacitance between the stationary object (22) and the rotating object (16).

9. A method (220) for self calibrating a multiple channel clearance sensor system comprising:

using at least first and second sensors (40, 42) to measure (221) at least respective first and second clearance parameter signals (66, 68) between a stationary object and a rotating object;

using at least first and second offset correction sections (137, 143) to measure respective first and second offset errors (130, 132) in the respective first and second clearance parameter signals (66, 68);

using at least first and second level shifters (120, 124) coupled to the respective said first and second offset errors and switchably coupled to the respective said first and second clearance parameter signals (66, 68) to shift (222) the first and second clearance parameter signals (66, 68) to compensate for the respective first and second offset errors (130, 132);

using at least first and second amplifiers (138, 140) to amplify the respective first and second level shifter outputs (134, 136);

using at least first and second analog to digital converters (ADC) (146, 148) coupled to the respective first and second amplifier outputs (142, 144) to provide respective first and second digital outputs (150, 152);

providing at least first and second signal level analyzers (154, 156) coupled to the respective first and second digital outputs (150, 152);

**characterized by** :

providing a common reference signal (116) switchably coupled (112, 114) to respective said first and second level shifters (120, 124);

switchably coupling (112, 114) the first and second level shifters (120, 124) and the common reference signal (116) between: i) the common reference signal (116) being input to the respective first and second level shifters (120, 124); and ii) the first and second clearance parameter signals (66, 68) being input to the respective first and second level shifters (120, 124);

measuring (224) a discrepancy in voltage signals obtained from the first and second signal level analyzers (154, 156) respectively when the common reference signal (116) is input to the respective first and second level shifters (120, 124); and adjusting the gain of one or both of the first and second amplifiers (138, 140) to match the measured discrepancy in the respective voltage signals.

10. The method of claim 9, wherein the clearance parameters between the stationary object and the rotating object are measured by a ratiometric technique.

11. The method of claim 9 or 10, wherein measuring the discrepancy comprises providing a common phase detector output signal to the channels.

12. The method of any of claims 9 to 11, further comprising triggering a maintenance request alert for a discrepancy threshold or a discrepancy trend.

**Patentansprüche**

1. System (110) für die Selbstkalibrierung eines Mehrfachkanal-Abstandssensor-Systems, Folgendes umfassend:

mindestens einen ersten und einen zweiten Sensor (40, 42) zum Messen mindestens eines ersten und eines zweiten Abstandsparametersignals (66, 68) zwischen einem stationären Objekt und einem rotierenden Objekt, mindesten einen ersten und einen zweiten Versatzkorrekturabschnitt (137, 143), die dafür konfiguriert sind, eine erste beziehungsweise zweite Versatzabweichung (130, 132) im ersten beziehungsweise zweiten Abstandsparametersignal (66, 68) zu bestimmen, mindestens einen ersten und einen zweiten Pegelwandler (120, 124), die mit der ersten beziehungsweise zweiten Versatzabweichung gekoppelt und schaltbar mit dem ersten beziehungsweise zweiten Abstandsparametersignal (66, 68) gekoppelt sind, mindestens einen ersten und einen zweiten Verstärker (138, 140), um die erste beziehungsweise zweite Pegelwandlerausgabe (134, 136) zu verstärken, mindestens einen ersten und einen zweiten Analog-Digital-Wandler (146, 148), die mit der ersten beziehungsweise zweiten Verstärkerausgabe (142, 144) gekoppelt sind, um eine erste beziehungsweise zweite digitale Ausgabe (150, 152) bereitzustellen,

mindestens eine erste und eine zweite Signalpegel-Analyseeinheit (154, 156), die mit der ersten beziehungsweise zweiten digitalen Ausgabe (150, 152) gekoppelt sind,

**dadurch gekennzeichnet, dass** das System (110) ferner Folgendes umfasst:

ein gemeinsames Referenzsignal (116), das dafür bereitgestellt ist, schaltbar mit dem ersten beziehungsweise zweiten Pegelwandler (120, 124) gekoppelt zu sein (112, 114), wobei das schaltbare Koppeln (112, 114) des ersten und des zweiten Pegelwandlers (120, 124) mit dem gemeinsamen Referenzsignal (116) funktionsfähig ist, zwischen Folgendem zu schalten: i) dem gemeinsamen Referenzsignal (116), das in den ersten beziehungsweise zweiten Pegelwandler (120, 124) eingegeben wird, und ii) dem ersten und dem zweiten Abstandsparametersignal (66, 68), die in den ersten beziehungsweise zweiten Pegelwandler (120, 124) eingegeben werden, wobei das System (110) dafür eingerichtet ist, derart funktionsfähig zu sein, dass, wenn das gemeinsame Referenzsignal (116) in den ersten beziehungsweise zweiten Pegelwandler (120, 124) eingegeben wird, eine Abweichung in Spannungssignalen, die aus der ersten beziehungsweise der zweiten Signalpegel-Analyseeinheit (154, 165) erzielt werden, gemessen wird, wobei die Verstärkung des ersten und/oder des zweiten Verstärkers (138, 140) so eingestellt wird, dass sie mit der gemessenen Abweichung in den entsprechenden Spannungssignalen übereinstimmt.

2. System (110) nach Anspruch 1, wobei die Abweichungsspannung vom ersten und vom zweiten Pegelwandler (120, 124) durch einen ersten beziehungsweise zweiten Versatzkorrekturabschnitt (137, 143) verwendet wird.

3. System (110) nach Anspruch 1 oder 2, wobei das Referenzsignal (116) intermittierend schaltbar mit dem ersten und den zweiten Pegelwandler (120, 124) gekoppelt ist.

4. System (110) nach einem der vorhergehenden Ansprüche, ferner einen ersten und einen zweiten automatischen Verstärkungsregler (139, 141) umfassend, die mit der ersten beziehungsweise zweiten Signalpegel-Analyseeinheit (154, 156) gekoppelt und dafür konfiguriert sind, eine Verstärkung des ersten beziehungsweise zweiten Verstärkers (138, 140) zu regeln.

**5.** System (110) nach einem der vorhergehenden Ansprüche, wobei das stationäre Objekt eine Verkleidung einer rotierenden Maschine umfasst.

**6.** System (110) nach einem der vorhergehenden Ansprüche, wobei das rotierende Objekt eine rotierende Schaufel einer rotierenden Maschine umfasst.

**7.** System (110) nach einem der vorhergehenden Ansprüche, wobei der Sensor einen kapazitiven Sensor, einen Sensor auf Mikrowellenbasis oder einen Sensor auf optischer Basis oder einen Wirbelstromsensor umfasst.

**8.** System (110) nach einem der vorhergehenden Ansprüche, wobei der Abstandsparameter eine Kapazitanz zwischen dem stationären Objekt (22) und dem rotierenden Objekt (16) umfasst.

**9.** Verfahren (220) für die Selbstkalibrierung eines Mehrfachkanal-Abstandssensor-Systems, Folgendes umfassend:

Verwenden mindestens eines ersten und zweiten Sensors (40, 42) zum Messen (221) mindestens eines ersten beziehungsweise zweiten Abstandsparametersignals (66, 68) zwischen einem stationären Objekt und einem rotierenden Objekt,

Verwenden mindestens eines ersten und eines zweiten Versatzkorrekturabschnittes (137, 143) zum Messen einer ersten beziehungsweise zweiten Versatzabweichung (130, 132) im ersten beziehungsweise zweiten Abstandsparametersignal (66, 68),

Verwenden mindestens eines ersten und eines zweiten Pegelwandlers (120, 124), die mit der ersten beziehungsweise zweite Versatzabweichung gekoppelt und schaltbar mit dem ersten beziehungsweise zweiten Abstandsparametersignal (66, 68) gekoppelt sind, zum Schalten (222) des ersten und zweiten Abstandsparametersignals (66, 68), um die erste beziehungsweise zweite Versatzabweichung (130, 132) zu kompensieren,

Verwenden mindestens eines ersten und eines zweiten Verstärkers (138, 140) zum Verstärken der ersten beziehungsweise zweiten Pegelwandlerausgabe (134, 136),

Verwenden mindestens eines ersten und eines zweiten Analog-DigitalWandlers (146, 148), die an die erste beziehungsweise zweite Verstärkerausgabe (142, 144) gekoppelt sind, zum Bereitstellen einer ersten beziehungsweise zweiten digitalen Ausgabe (150, 152),

Bereitstellen mindestens einer ersten und einer zweiten Signalpegel-Analyseeinheit (154, 156), die mit der ersten beziehungsweise zweiten digitalen Ausgabe (150, 152) gekoppelt sind, durch Folgendes gekennzeichnet:

Bereitstellen eines gemeinsamen Referenzsignals (116), das schaltbar mit dem ersten beziehungsweise zweiten Pegelwandler (120, 124) gekoppelt ist (112, 114), schaltbares Koppeln (112, 114) des ersten und des zweiten Pegelwandlers (121, 124) mit dem gemeinsamen Referenzsignal (116) zwischen Folgendem: i) dem gemeinsamen Referenzsignal (116), das in den ersten beziehungsweise zweiten Pegelwandler (120, 124) eingegeben wird, und ii) dem ersten und dem zweiten Abstandsparametersignal (66, 68), die in den ersten beziehungsweise zweiten Pegelwandler (120, 124) eingegeben werden,

Messen (224) einer Abweichung in Spannungssignalen, die aus der ersten und der zweiten Signalpegel-Analyseeinheit (154, 165) erzielt werden, wenn das gemeinsame Referenzsignal (116) in den ersten beziehungsweise zweiten Pegelwandler (120, 124) eingegeben wird, und

Einstellen der Verstärkung des ersten und/oder zweiten Verstärkers (138, 140) derart, dass sie mit der gemessenen Abweichung in den entsprechenden Spannungssignalen übereinstimmt.

**10.** Verfahren nach Anspruch 9, wobei die Abstandsparameter zwischen dem stationären Objekt und dem rotierenden Objekt mittels einer ratiometrischen Technik gemessen werden.

**11.** Verfahren nach Anspruch 9 oder 10, wobei das Messen der Abweichung das Bereitstellen eines gemeinsamen Phasendetektor-Ausgangssignals für die Kanäle umfasst.

**12.** Verfahren nach einem der Ansprüche 9 bis 11, ferner das Auslösen eines Wartungsanforderungsalarms bei einem Abweichungsgrenzwert oder einer Abweichungstendenz umfassend.

**Revendications**

**1.** Système (110) pour l'auto-étalonnage d'un système de capteurs de jeu de canaux multiples, comprenant :

au moins un premier et un second capteur (40, 42) pour mesurer au moins des premier et second signaux respectifs de paramètres de jeu (66, 68) entre un objet stationnaire et un objet rotatif ;

au moins une première et une seconde section de correction de décalage (137, 143) configurées pour déterminer des première et seconde erreurs de décalage respectives (130, 132) dans les premier et second signaux respectifs de paramètres de jeu (66, 68) ;
au moins un premier et un second décaleur de niveau (120, 124) couplés auxdites première et seconde erreurs de décalage respectives et couplés par commutation aux premier et second signaux respectifs de paramètres de jeu (66, 68) ;
au moins un premier et un second amplificateur (138, 140) pour amplifier les première et seconde sorties respectives (134, 136) des décaleurs de niveau ;
au moins un premier et un second convertisseur analogique-numérique (ADC) (146, 148) couplés aux première et seconde sorties d'amplificateurs respectives (142, 144) afin de fournir des première et seconde sorties numériques respectives (150, 152) ;
au moins un premier et un second analyseur de niveau de signal (154, 156) couplés aux première et seconde sorties numériques respectives (150, 152) ;
**caractérisé en ce que** le système (110) comprend en outre :
un signal de référence commun (116) fourni pour être couplé par commutation (112, 114) auxdits premier et second décaleurs de niveau respectifs (120, 124) ;
dans lequel le couplage de commutation (112, 114) des premier et second décaleurs de niveau (120, 124) et le signal de référence commun (116) sont à même de commuter entre : i) le signal de référence commun (116) qui est saisi dans les premier et second décaleurs de niveau respectifs (120, 124) ; et ii) les premier et second signaux de paramètres de jeu (66, 68) qui sont saisis dans les premier et second décaleurs de niveau respectifs (120, 124) ;
le système (110) étant à même d'opérer de sorte que, lorsque le signal de référence commun (116) est saisi dans les premier et second décaleurs de niveau respectifs (120, 124), un écart des signaux de tension tirés des premier et second analyseurs de niveau de signaux (154, 156) soit respectivement mesuré, le gain de l'un et/ou l'autre des premier et second amplificateurs (138, 140) étant ajusté pour correspondre à l'écart mesuré dans les signaux de tension respectifs.

2. Système (110) selon la revendication 1, dans lequel ledit écart de tension est utilisé par lesdits premier et second décaleurs de niveau (120, 124) via lesdites première et seconde sections de correction d'erreurs respectives (137, 143).

3. Système (110) selon la revendication 1 ou la revendication 2, dans lequel ledit signal de référence (116) est couplé par commutation intermittente aux premier et second décaleurs de niveau (120, 124).

4. Système (110) selon l'une quelconque des revendications précédentes, comprenant en outre des premier et second contrôleurs de gain automatiques (139, 141) couplés aux premier et second analyseurs de niveau de signal respectifs (154, 156) et configurés pour commander un gain des premier et second amplificateurs respectifs (138, 140).

5. Système (110) selon l'une quelconque des revendications précédentes, dans lequel l'objet stationnaire comprend un carénage d'une machine rotative.

6. Système (110) selon l'une quelconque des revendications précédentes, dans lequel l'objet rotatif comprend une pale rotative d'une machine rotative.

7. Système (110) selon l'une quelconque des revendications précédentes, dans lequel le capteur comprend un capteur capacitif, un capteur à base de micro-ondes, un capteur à base optique ou un capteur de courants de Foucault.

8. Système (110) selon l'une quelconque des revendications précédentes, dans lequel le paramètre de jeu comprend une capacité entre l'objet stationnaire (22) et l'objet rotatif (16).

9. Procédé (220) pour l'auto-étalonnage d'un système de capteurs de jeu de canaux multiples comprenant les étapes consistant à :

utiliser au moins un premier et un second capteurs (40, 42) pour mesurer (221) au moins des premier et second signaux de paramètres de jeu respectifs (66, 68) entre un objet stationnaire et un objet rotatif ;
utiliser au moins une première et une seconde sections de correction de décalage (137, 143) pour mesurer des première et seconde erreurs de décalage respectives (130, 132) dans les premier et second signaux de paramètres de jeu respectifs (66, 68) ;
utiliser au moins un premier et un second décaleurs de niveau (120, 124) couplés auxdites première et seconde erreurs de décalage respectives et couplés par commutation auxdits premier et second signaux de paramètres de jeu respectifs (66, 68) pour décaler (222) les premier et second signaux de paramètres de jeu (66, 68) afin de compenser les première et seconde erreurs de décalage respectives (130, 132) ;

utiliser au moins un premier et un second amplificateur (138, 140) pour amplifier les première et seconde sorties respectives (134, 136) des décaleurs de niveau ;

utiliser au moins un premier et un second convertisseur analogique-numérique (ADC) (146, 148) couplés aux première et seconde sorties d'amplificateur respectives (142, 144) afin de fournir des première et seconde sorties numériques respectives (150, 152) ;

fournir au moins un premier et un second analyseur de niveau de signal (154, 156) couplés aux première et seconde sorties numériques respectives (150, 152) ;

**caractérisé par** les étapes consistant à :

fournir un signal de référence commun (116) couplé par commutation (112, 114) auxdits premier et second décaleurs de niveau respectifs (120, 124) ;

coupler par commutation (112, 114) les premier et second décaleurs de niveau (120, 124) et le signal de référence commun (116) entre : i) le signal de référence commun (116) qui est saisi dans les premier et second décaleurs de niveau respectifs (120, 124) ; et ii) les premier et second signaux de paramètres de jeu (66, 68) qui sont saisis dans les premier et second décaleurs de niveau respectifs (120, 124) ;

mesurer (224) un écart dans les signaux de tension tirés des premier et second analyseurs de niveau de signal (154, 156) respectivement lorsque le signal de référence commun (116) est saisi dans les premier et second décaleurs de niveau respectifs (120, 124) ; et

ajuster le gain de l'un et/ou l'autre des premier et second amplificateurs (138, 140) afin qu'il corresponde à l'écart mesuré dans les signaux de tension respectifs.

10. Procédé selon la revendication 9, dans lequel les paramètres de jeu entre l'objet stationnaire et l'objet rotatif sont mesurés par une technique ratiométrique.

11. Procédé selon la revendication 9 ou la revendication 10, dans lequel la mesure de l'écart comprend la fourniture d'un signal de sortie commun des détecteurs de phase aux canaux.

12. Procédé selon l'une quelconque des revendications 9 à 11, comprenant en outre le déclenchement d'une alerte de demande d'entretien pour un seuil d'écart ou une tendance d'écart.

FIG.1

FIG.2

80

| SENSORS FOR MEASURING CLEARANCE PARAMETER | ~82 |

↓

| OFFSET CORRECTION SECTION TO DETERMINE OFFSET ERROR IN THE CLEARANCE PARAMETER SIGNALS | ~84 |

↓

| LEVEL SHIFTERS TO CORRECT OFFSET IN CLEARANCE PARAMETER SIGNALS | ~86 |

↓

| SIGNAL LEVEL ANALYZERS TO DETERMINE DIFFERENCES BETWEEN MULTIPLE SENSOR CHANNEL OUTPUT SIGNALS | ~88 |

↓

| A REFERENCE SCHEME FOR MATCHING THE CHANNEL GAINS | ~90 |

FIG. 3

FIG. 4a

EP 2 312 266 B1

FIG. 4b

FIG. 5

EP 2 312 266 B1

FIG. 6

220

MEASURING A CLEARANCE PARAMETER BETWEEN A STATIONARY OBJECT AND A ROTATING OBJECT USING SENSOR CHANNELS — 221

COMPENSATING FOR OFFSET ERROR IN THE CLEARANCE PARAMETER — 222

PROVIDING A REFERENCE CAPABILITY FOR THE SENSOR CHANNELS TO MEASURE DISCREPANCY BETWEEN CHANNELS — 224

CONTROLLING GAIN VALUES OF THE AMPLIFIERS — 226

TRACKING THE DISCREPANCY PERIODICALLY — 228

TRIGGERING AN ALERT, IF THE DISCREPANCY AND/OR TREND OF DISCREPANCY EXCEEDS LIMITS — 230

FIG. 7

**EP 2 312 266 B1**

**REFERENCES CITED IN THE DESCRIPTION**

**Patent documents cited in the description**

- US 20060239813 A1

- FR 2624324